# EUROPÄISCHE PATENTSCHRIFT

(11) **EP 1 096 160 B1**
(45) Veröffentlichungstag und Bekanntmachung des Hinweises auf die Patenterteilung: **14.04.2004**
(21) Anmeldenummer: 00122673.7
(22) Anmeldetag: 18.10.2000
(51) Int. Cl.: F16B 13/08

(54) **Befestigungselement**
Fastening device
Dispositif de fixation

(30) Priorität: 26.10.1999 DE 19951484; 07.12.1999 DE 19958715
(43) Veröffentlichungstag der Anmeldung: 02.05.2001
(73) Patentinhaber: TOGE-Dübel A. Gerhard KG, 90431 Nürnberg (DE)
(72) Erfinder: Gerhard, Anton, 90427 Nürnberg (DE)
(74) Vertreter: Rau, Manfred, Dr. Dipl.-Ing.

(56) Entgegenhaltungen:
- EP-A- 0 186 622
- DE-A- 3 709 361
- DE-A- 19 531 693
- US-A- 5 651 650

## Beschreibung

Die Erfindung betrifft ein Befestigungselement nach dem Oberbegriff des Anspruches 1.

Ein derartiges Befestigungselement ist aus der DE 37 09 361 (entspr. US-Patent 4,892,450) bekannt.

Diese Befestigungselemente, die in der Praxis auch als Decken-Nägel bezeichnet werden, haben sich hundertmillionenfach bewährt. Ein Nachteil liegt darin, daß sie bisher nicht korrosionsfest ausgebildet werden können, obwohl dies in zahlreichen Anwendungsbereichen aus sicherheitstechnischen Gründen gewünscht wird.

Der Erfindung liegt daher die Aufgabe zugrunde, einen Decken-Nagel der gattungsgemäßen Art so auszugestalten, daß er ohne Beeinträchtigung seiner anwendungstechnischen Eigenschaften korrosionsfest ist.

Diese Aufgabe wird erfindungsgemäß durch die Merkmale im Kennzeichnungsteil des Anspruches 1 gelöst. Obwohl hochlegierte Chrom-Nickel-Stähle nicht härtbar sind, gelingt es durch eine an sich bekannte Behandlung, das Grundmaterial des Klemmkeils gegenüber dem insoweit unbehandelten Material des Ankerbolzens härter zu machen, und zwar um das eineinhalbfache bis zweifache, wobei diese erhöhte Härte und Zugfestigkeit auch bei einer spanlosen Formung des Klemmkeils erhalten bleibt.

Die Form der den Klemmkeil aufnehmenden Ausnehmung im Flansch ist optimal den Bearbeitungsmöglichkeiten von Chrom-Nickel-Stahl angepaßt.

Entsprechendes gilt für die aus den Unteransprüchen hervorgehende Form des Klemmkeils.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: einen Ankerbolzen in Seiten-Längs-Ansicht entsprechend dem Sichtpfeil I in Fig. 2,
- Fig. 2: den Ankerbolzen in einer weiteren Seiten-Längs-Ansicht entsprechend dem Sichtpfeil II in Fig. 1,
- Fig. 3: eine Draufsicht auf den Ankerbolzen entsprechend dem Sichtpfeil III in Fig. 1,
- Fig. 4: einen Klemmkeil in Seiten-Längs-Ansicht entsprechend dem Sichtpfeil IV in Fig. 5,
- Fig. 5: eine weitere Seiten-Längs-Ansicht des Klemmkeils entsprechend dem Sichtpfeil V in Fig. 4,
- Fig. 6: ein aus Ankerbolzen und Klemmkeil bestehendes Befestigungselement in ungespreiztem Zustand in einer Seiten-Längs-Ansicht entsprechend dem Sichtpfeil VI in Fig. 7,
- Fig. 7: eine weitere Seiten-Längs-Ansicht des Befestigungselementes entsprechend dem Sichtpfeil VII in Fig. 6 und
- Fig. 8: eine Draufsicht auf das Befestigungselement entsprechend dem Sichtpfeil VIII in Fig. 6.

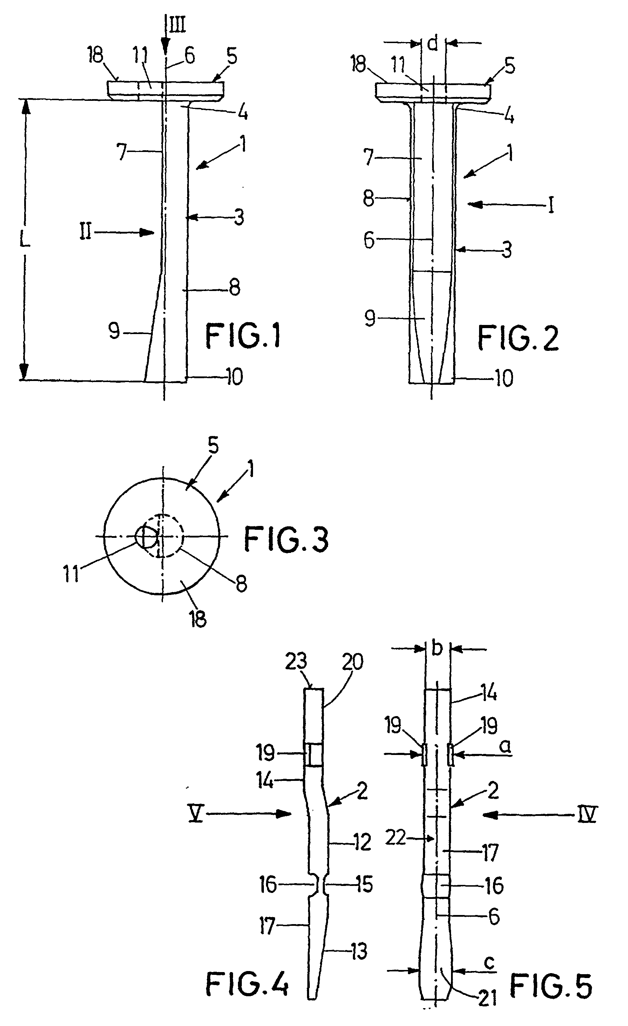

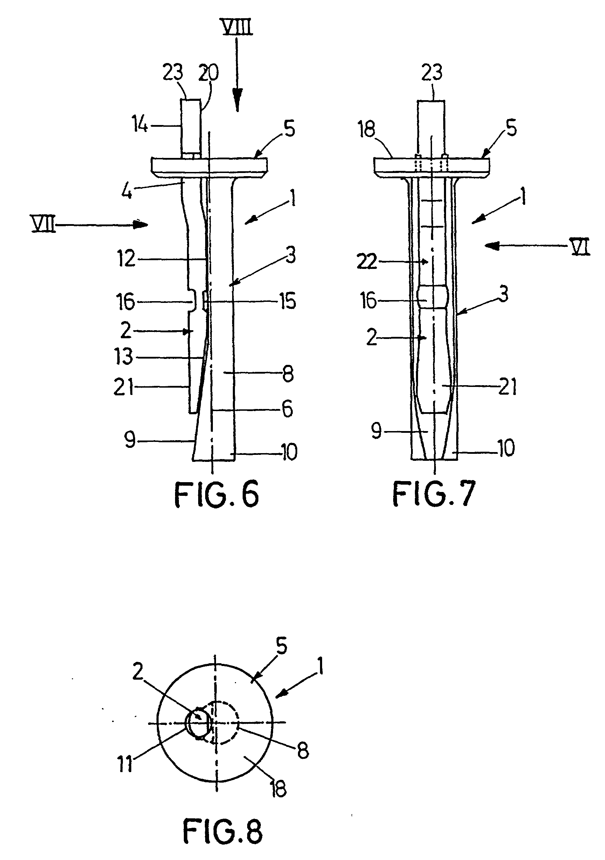

Das in der Zeichnung dargestellte Befestigungselement weist einen Ankerbolzen 1 und einen Klemmkeil 2 auf. Der Ankerbolzen 1 besteht in seinem Grundaufbau aus einem Schaft 3 und einem an dessen hinteren Ende 4 ausgebildeten kreisscheibenförmigen Flansch 5, wobei Schaft 3 und Flansch 5 einteilig, beispielsweise durch entsprechende Verformung aus einem Draht, hergestellt sind. Der Schaft 3 besteht in seinem Grundaufbau aus einem massiven Teil-Kreis-Zylinder mit einer Mittel-Längs-Achse 6, die der Einfachheit halber auch als Achse 6 des Ankerbolzens 1 und des gesamten Befestigungselementes bezeichnet wird. Vom hinteren Ende 4 des Schaftes 3 verläuft etwa über die Hälfte bis zwei Drittel seiner Gesamtlänge L eine Fläche 7 parallel zur Achse 6, und zwar in deren Nähe, so daß sich die Zylinderfläche 8 des Schaftes 3 in diesem Bereich nur über etwa 190° bis 200° Umfangswinkel erstreckt, wie aus Fig. 3 und 8 erkennbar ist. Im vorderen Bereich des Schaftes 3 erstreckt sich - ausgehend von der Fläche 7 - eine Keilfläche 9, die also vom vorderen Ende 10 des Schaftes 3 zur Achse 6 hin geneigt ist. Am vorderen Ende 10 nähert sich der Querschnitt des Schaftes 3 wieder einem - allerdings noch nicht vollständigen - Kreisprofil wie Fig. 3 und 8 zu entnehmen ist. Die Keilfläche 9 und die Fläche 7 sind jeweils eben, müssen dies aber nicht sein.

Im Flansch 5 ist eine kreiszylindrische Ausnehmung 11 ausgebildet, die parallel zur Achse 6 verläuft. Sie tangiert die Fläche 7 und steht über die Zylinderfläche 8 vor, wie jeweils wie Fig. 3 und 8 entnehmbar ist.

Der Klemmkeil 2 weist eine Anlagefläche 12 auf, die der Fläche 7 des Schaftes 3 angepaßt ist. Im vorderen Bereich des Klemmkeils 2 schließt sich an die Anlagefläche 12 eine Spreizfläche 13 an, die in ungespreiztem Zustand des Befestigungselementes zumindest teilweise an der Keilfläche 9 des Schaftes 3 anliegt, wie Fig. 6 und 7 entnehmbar ist. In diesem ungespreizten Zustand liegt der durch die Anlagefläche 12 und die Spreizfläche 13 definierte Bereich des Klemmkeils 2 innerhalb des durch die vervollständigte Zylinderfläche 8 gebildeten Kreises, steht also nicht radial über diese Fläche vor. Der Klemmkeil 2 weist in seinem dem Flansch 5 zugeordneten Bereich einen von der Fläche 7 weg abgekröpften Abschnitt 14 auf, der parallel zur Achse 6 verläuft, die Ausnehmung 11 durchsetzt und über den Flansch 5 nach hinten vorsteht. In seinem mittleren Bereich weist der Klemmkeil 2 eine sogenannte Stauchzone auf, die durch eine leichte Einbuchtung 15 in der Anlagefläche 12 und eine zugeordnete Einkerbung 16 in der Außenfläche 17 des Klemmkeils 2 gebildet ist.

Der Klemmkeil 2 weist in seinem abgekröpften Abschnitt 14, und zwar zugeordnet zur Stirnfläche 18, zwei einander in einer zur Fläche 7 parallelen Ebene diametral gegenüberliegende stegartige Vorsprünge 19 auf, deren Außenabstand a voneinander etwas größer ist als der Durchmesser d der Ausnehmung 11. Die größte Breite b des Klemmkeils 2 im Bereich seines abgekröpften Abschnittes 14 ist wiederum etwas kleiner als der Durchmesser d. Der abgekröpfte Abschnitt 14 weist eine der Fläche 7 zugewandte abgeflachte Innenfläche 20 auf, liegt also in diesem Bereich nicht an der Ausnehmung 11 an. Der Klemmkeil 2 weist im Bereich seiner Spreizfläche 13 einen schaufelartig verbreiterten Spreiz-Abschnitt 21 auf. Dessen Breite c ist größer als der Durchmesser d der Ausnehmung 11. Der Grund für die Verbreiterung des Spreiz-Abschnittes 21 relativ zum gekröpften Abschnitt 14 und zum Zwischen-Abschnitt 22 liegt darin, daß zumindest der Abschnitt 14 schlanker ausgebildet werden muß wegen der Begrenzung des Durchmessers d der Ausnehmung 11.

Der Ankerbolzen 1 und der Klemmkeil 2 bestehen beide aus dem gleichen Material, nämlich einem hochlegierten rostfreien Stahl, also einem Chrom-Nickel-Stahl. Der Ankerbolzen 1 hat beispielsweise eine Zugfestigkeit von etwa 700 N/mm². Wie bereits erwähnt, ist der Ankerbolzen 1 durch Verformen eines Drahtes, also eines Abschnitts aus zylindrischem Material (Rundmaterial), durch Anformen des Flansches 5 gebildet. Die Fläche 7 und die Keilfläche 9 werden durch Ausstanzen aus dem nach der Anformung des Flansches 5 zylindrischen Schaft 3 ausgebildet.

Der Klemmkeil 2 wird ebenfalls aus Rundmaterial hergestellt, das durch sogenanntes Hartziehen eine Zugfestigkeit 1300 bis 1400 N/mm² erhalten hat. Die entspricht einer Rockwell-Härte von ungefähr 42 HRc. Die Zugfestigkeit und die erhöhte Härte des Materials, aus dem der Klemmkeil 2 gefertigt wird, ist also durch das Hartziehen gegenüber dem nicht derart behandelten Werkstoff etwa verdoppelt worden. Die geschilderte Form erhält der Klemmkeil 2 durch einen Prägevorgang, also spanlos. Nach diesem Prägevorgang weist er allerdings noch nicht die in Fig. 4 und 5 dargestellten Vorsprünge 19 auf. Der Klemmkeil 2 wird dann von der Schaft-Seite her mit seinem abgekröpften Abschnitt 14 in die Ausnehmung 11 geschoben, bis er weitestmöglich durch den Flansch 5 geschoben ist, bis also der abgekröpfte Abschnitt 14 vollständig oder zumindest angenähert vollständig durch die Ausnehmung 11 hindurchgeschoben ist. Die Außenfläche 17 liegt hierbei an der Fläche 7 an. Die Spreizfläche 13 befindet sich zumindest teilweise in Überdeckung mit der Fläche 7. Nunmehr werden die Vorsprünge 19 durch einen Prägevorgang am Klemmkeil 2 ausgebildet. Anschließend wird der Klemmkeil 2 wieder in Richtung auf das hintere Ende 4 des Schaftes 3 verschoben, wobei die Vorsprünge 19 teilweise in den Flansch 5 eingepreßt werden, und zwar von dessen Stirnfläche 18 her. Sie durchdringen - wie Fig. 8 entnehmbar ist - nicht vollständig den Flansch 5. Durch die Vorsprünge 19 und den Spreiz-Abschnitt 21 wird eine Verliersicherung des Klemmkeils 2 gegenüber dem Ankerbolzen 1 gebildet, da der Klemmkeil 2 in keiner Richtung aus dem Flansch 5 herausrutschen kann. Durch die geschilderte Verkeilung der Vorsprünge 19 im Flansch 5 wird wiederum eine Mitnahmeverbindung geschaffen. Wenn das vormontierte, aber noch nicht verspreizte Befestigungselement in ein Bohrloch eingeschoben wird und hierbei mit leichten Hammerschlägen auf die hintere Stirnseite 23 des Klemmkeils 2 eingetrieben wird, dann wird der Ankerbolzen 1 über die Vorsprünge 19 mitgenommen, die - wie beschrieben wurde - den Flansch 5 nur auf der Seite seiner äußeren Stirnfläche 18 durchsetzen. Wenn das vordere Ende 10 des Ankerbolzens 1 beim Einsetzen in das Bohrloch am Bohrlochgrund angekommen ist, oder wenn der Ankerbolzen 1 nicht tiefer in das Bohrloch eindringen kann, weil der Flansch 5 bereits fest anliegt, dann erfolgt das Eintreiben des Klemmkeils 2, der mit seiner Spreizfläche 13 über die Keilfläche 9 gleitet und hierbei bezogen auf die Achse 6 radial nach außen verschoben wird. Jetzt erst durchdringen die Vorsprünge 19 den Flansch 5 vollständig und gelangen teilweise oder völlig in Überdeckung mit dem Schaft 3. Wenn die Verkeilung vollendet ist, ein Teil des abgekröpften Abschnitts 14 aber noch über die Stirnfläche 18 des Flansches 5 hinaussteht, kann der abgekröpfte Abschnitt 14 weiter eingetrieben werden, wobei dann der Klemmkeil 2 im Bereich seiner Stauchzone unter Verkürzung des Klemmkeils 2 gestaucht wird.

## Patentansprüche

1. Befestigungselement, bestehend aus einem Ankerbolzen (1) mit einem Schaft (3) und einem Klemmkeil (2), wobei am hinteren Ende (4) des Ankerbolzens (1) ein Flansch (5) mit einer Ausnehmung (11) für den Klemmkeil (2) vorgesehen ist, wobei der Schaft (3) in seinem vorderen Bereich mit einer Keilfläche (9) versehen ist, die von seinem vorderen Ende (10) in Richtung zum hinteren Ende (4) zur Mittel-Längs-Achse (6) des Ankerbolzens (1) hin geneigt ist, wobei sich an diese Keilfläche (9) eine sich im wesentlichen parallel zur Mittel-Längs-Achse (6) erstreckende, bis zum hinteren Ende (4) verlaufende Fläche (7) anschließt, und wobei der Klemmkeil (2) in ungespreiztem Zustand mit einer Anlagefläche (12) an der achsparallelen Fläche (7) und mit einer Spreizfläche (13) an der Keilfläche (9) anliegt, wobei sich das vordere Ende des Klemmkeils (2) nicht bis zum vorderen Ende (10) des Schaftes (3) erstreckt und das hintere Ende des Klemmkeils (2) über den Flansch (5) hinausragt, wobei der Klemmkeil (2) auf seiner Außenfläche (17) mit über diese hinausragenden Vorsprüngen (19) versehen ist, die in ungespreiztem Zustand fest gegen die Ausnehmung (11) des Flansches (5) anliegen, und wobei ansonsten die Außenfläche (17) des Klemmkeils (2) Spiel gegenüber der Ausnehmung (11) aufweist,
**dadurch gekennzeichnet,**
**daß** der Ankerbolzen (1) und der Klemmkeil (2) aus rostfreiem Stahl bestehen und
**daß** der Klemmkeil (2) eine deutlich höhere Härte aufweist als der Ankerbolzen (1).

2. Befestigungselement nach Anspruch 1, **dadurch gekennzeichnet,**
**daß** der Ankerbolzen (1) und der Klemmkeil (2) aus hochlegiertem Chrom-Nickel-Stahl bestehen.

3. Befestigungselement nach Anspruch 1 oder 2, **dadurch gekennzeichnet,**
**daß** der Ankerbolzen (1) und der Klemmkeil (2) aus dem gleichen Stahl bestehen.

4. Befestigungselement nach einem der Ansprüche 1 bis 3, **dadurch gekennzeichnet,**
**daß** der Klemmkeil (2) aus hartgezogenem rostfreiem Stahl besteht.

5. Befestigungselement nach einem der Ansprüche 1 bis 4, **dadurch gekennzeichnet,**
**daß** der Klemmkeil (2) etwa eineinhalb mal bis doppelt so hart ist wie der Ankerbolzen (1).

6. Befestigungselement nach einem der Ansprüche 1 bis 5, **dadurch gekennzeichnet,**
**daß** die Ausnehmung (11) eine kreiszylindrische Form aufweist.

7. Befestigungselement nach einem der Ansprüche 1 bis 6, **dadurch gekennzeichnet,**
**daß** der Klemmkeil (2) im Bereich des Flansches (5) einen den Flansch (5) durchsetzenden, vom Schaft (3) weg abgekröpften Abschnitt (14) aufweist.

8. Befestigungselement nach einem der Ansprüche 1 bis 7, **dadurch gekennzeichnet,**
**daß** der Klemmkeil (2) im Bereich seines vorderen, der Spreizfläche (13) zugeordneten Endes einen Spreiz-Abschnitt (21) mit einer Breite c aufweist, die größer ist als der Durchmesser d der Ausnehmung 11, und
**daß** der Klemmkeil (2) benachbart zur dem Schaft (3) abgewandten Stirnfläche (18) mit Vorsprüngen (19) versehen ist, die im Flansch (5) verkeilt sind.

9. Befestigungselement nach Anspruch 8, **dadurch gekennzeichnet,**
**daß** die Vorsprünge (19) in ungespreiztem Zustand des Klemmkeils (2) den Flansch (5) von dessen äußerer Stirnfläche (18) her nur teilweise durchdringen.

## Claims

1. Fastening element, comprising a tie bolt (1) with a shank (3) and a clamping wedge (2); wherein a flange (5) with a recess (11) for the clamping wedge (2) is provided at the rear end (4) of the tie bolt (1); wherein the shank (3), in its front area, is provided with a wedge face (9) which, from its front end (10) in a direction to the rear end (4), inclines towards the central longitudinal axis (6) of the tie bolt (1); wherein this wedge face (9) is adjoined by a surface (7) which is substantially parallel to the central longitudinal axis (6) and extends as far as to the rear end (4); and wherein the clamping wedge (2), in the non-expanded condition, bears by a contact face (12) against the axially parallel surface (7) and by an expansion face (13) against the wedge face (9); wherein the front end of the clamping wedge (2) does not extend as far as to the front end (10) of the shank (3) and the rear end of the clamping wedge (2) extends beyond the flange (5); wherein the clamping wedge (2), on its outer surface (17), is provided with projections (19) which project there-beyond and which, in the non-expanded condition, bear tightly against the recess (11) of the flange (5); and wherein the outer surface (17) of the clamping wedge (2) has play relative to the recess (11);
**characterized**
**in that** the tie bolt (1) and the clamping wedge (2) consist of stainless steel; and
**in that** the clamping wedge (2) has a distinctly greater hardness than the tie bolt (1).

2. Fastening element according to claim 1, **characterized in that** the tie bolt (1) and the clamping wedge (2) consist of high-alloy chromium-nickel steel.

3. Fastening element according to claim 1 or 2, **characterized in that** the tie bolt (1) and the clamping wedge (2) consist of the same steel.

4. Fastening element according to one of claims 1 to 3, **characterized in that** the clamping wedge (2) consists of hard drawn stainless steel.

5. Fastening element according to one of claims 1 to 4, **characterized in that** the clamping wedge (2) is approximately one and a half times to twice as hard as the tie bolt (1).

6. Fastening element according to one of claims 1 to 5, **characterized in that** the recess (1) has a circular cylindrical shape.

7. Fastening element according to one of claims 1 to 6, **characterized in that**, in the vicinity of the flange (5), the clamping wedge (2) comprises a section (14) that is crimped in a direction away from the shank (3) and passes through the flange (5).

8. Fastening element according to one of claims 1 to 7, **characterized**
**in that** the clamping wedge (2), in the vicinity of its front end allocated to the expansion face (13), has an expanded section (21) of a width c that exceeds the diameter d of the recess 11; and
**in that** the clamping wedge (2), in vicinity to the front end (18) that is turned way from the shank (3), is provided with projections (19) which are wedged in the flange (5).

9. Fastening element according to claim 8, **characterized in that**, in the non-expanded condition of the clamping wedge (2), the projections (19) only partially pass through the flange (5) from the outer front end (18) thereof.

## Revendications

1. Élément de fixation se composant d'un boulon d'ancrage (1) avec une tige (3) et une clavette de serrage (2), une bride (5) avec un évidement (11) étant prévue sur l'extrémité arrière (4) du boulon d'ancrage (1) pour la clavette de serrage (2), la tige (3) étant munie dans sa zone avant d'une surface en coin (9) qui est inclinée depuis son extrémité avant (10) en direction de l'extrémité arrière (4) par rapport à l'axe longitudinal médian (6) du boulon d'ancrage (1), une surface (7), qui s'étend sensiblement parallèlement à l'axe longitudinal médian (6) et jusque vers l'extrémité arrière (4), se raccordant à cette surface en coin (9), et la clavette de serrage (2) s'appliquant à l'état non écarté contre la surface (7) parallèle à l'axe par une surface de contact (12) et contre la surface en coin (9) par une surface d'écartement (13), l'extrémité avant de la clavette de serrage (2) ne s'étendant pas jusqu'à l'extrémité avant (10) de la tige (3) et l'extrémité arrière de la clavette de serrage (2) dépassant au-delà de la bride (5), la clavette de serrage (2) étant munie sur sa surface extérieure (17) de saillies (19) qui dépassent de celle-ci et qui, à l'état non écarté, sont appliquées fermement contre l'évidement (11) de la bride (5), et la surface extérieure (17) de la clavette de serrage (2) présentant sinon un jeu par rapport à l'évidement (11),
**caractérisé en ce que**
le boulon d'ancrage (1) et la clavette de serrage (2) se composent d'acier inoxydable et
la clavette de serrage (2) présente une dureté nettement plus élevée que le boulon d'ancrage (1).

2. Élément de fixation selon la revendication 1, **caractérisé en ce que** le boulon d'ancrage (1) et la clavette de serrage (2) se composent d'acier au chrome-nickel fortement allié.

3. Élément de fixation selon la revendication 1 ou 2, **caractérisé en ce que** le boulon d'ancrage (1) et la clavette de serrage (2) se composent du même acier.

4. Élément de fixation selon l'une des revendications 1 à 3, **caractérisé en ce que** la clavette de serrage (2) se compose d'acier inoxydable étiré à froid.

5. Élément de fixation selon l'une des revendications 1 à 4, **caractérisé en ce que** la clavette de serrage (2) est environ une fois et demi à deux fois plus dure que le boulon d'ancrage (1).

6. Élément de fixation selon l'une des revendications 1 à 5, **caractérisé en ce que** l'évidement (11) présente une forme cylindrique circulaire.

7. Élément de fixation selon l'une des revendications 1 à 6, **caractérisé en ce que** la clavette de serrage (2) présente dans la zone de la bride (5) un tronçon (14) qui traverse la bride (5) et qui est coudé en éloignement de la tige (3).

8. Élément de fixation selon l'une des revendications 1 à 7, **caractérisé en ce que** la clavette de serrage (2) présente dans la zone de son extrémité avant associée à la surface d'écartement (13) un tronçon d'écartement (21) avec une largeur c qui est supérieure au diamètre d de l'évidement (11) et la clavette de serrage (2) est munie, au voisinage de la surface frontale (18) détournée de la tige (3), de saillies (19) qui sont coincées dans la bride (5).

9. Élément de fixation selon la revendication 8, **caractérisé en ce que**, à l'état non écarté de la clavette de serrage (2), les saillies (19) ne traversent que partiellement la bride (5) depuis sa surface frontale extérieure (18).
